# EUROPEAN PATENT SPECIFICATION

(11) **EP 2 206 948 B1**
(45) Date of publication and mention of the grant of the patent: **25.07.2018**
(21) Application number: 10150174.0
(22) Date of filing: 06.01.2010
(51) Int. Cl.: F21V 8/00, G02B 6/00

(54) **High-luminance frontlight assembly and related display systems**
Frontleuchteneinheit mit hoher Leuchtkraft und verwandte Anzeigesysteme
Ensemble d'éclairage par l'avant à forte luminance et systèmes d'affichage correspondants

(30) Priority: 13.01.2009 US 353038
(43) Date of publication of application: 14.07.2010
(73) Proprietor: Honeywell International Inc., Morris Plains, NJ 07950 (US)
(72) Inventor: Larson, Brent D., Morristown, NJ 07962-2245 (US)
(74) Representative: Houghton, Mark Phillip

(56) References cited:
- WO-A1-01/51849
- WO-A1-01/86200
- WO-A1-03/078892
- WO-A1-2004/070464
- WO-A1-2006/041278
- WO-A1-2006/043231
- US-A- 5 999 239
- US-A1- 2006 056 196
- US-A1- 2008 278 658

## Description

### TECHNICAL FIELD

The subject matter described herein relates generally to electronic display systems, and more particularly, embodiments of the subject matter relate to compact frontlight assemblies and related display systems capable of achieving high luminance.

### BACKGROUND

Electronic cockpit displays (e.g., glass cockpits) have replaced traditional mechanical gauges in aircraft and utilize computerized or electronic displays to graphically convey information related to various electronic systems associated with the electronic display. Rather than attempting to accommodate the spatial constraints of a flight deck in an aircraft, some electronic display systems utilize head-mounted displays or near-to-eye (NTE) displays, which do not require additional space within a cockpit flight deck, to present information to a user. In general, these head-mounted displays or NTE displays require a unique combination of physical and optical properties for reliable and effective use in aviation environments. For example, the glare caused by sunlight requires that the display be capable of achieving high levels of luminance. At the same time, it is desirable that the display be compact, dissipate little heat, and possess other imaging characteristics, for example, that the display is suitable for collimated viewing.

Some prior art NTE display systems utilize emissive display technologies, such as organic light-emitting diode (OLED) technologies, where the display element generates the light used for the display. In order to achieve high levels of visibility under bright ambient light conditions, these emissive displays either require use of additional components (e.g., filters or screens) or an increased amount of current. Increasing the current consumption produces undesirable effects such as, for example, residual images, differential aging, increased heat generation, and as a result, degrades the lifetime or reliability of the display element. Other prior art NTE display systems separate or decouple the generation of light from the modulation of light, for example, by utilizing a backlight to illuminate a display element, such as a liquid crystal display (LCD), which modulates the light from the backlight to produce an image on the opposing side of the display element. However, when used in a compact NTE display, the amount of heat generated by the backlight is limited, which in turn limits the ability of these display systems to achieve the luminance that is desired in aircraft environments.

WO 01/51849 discloses a transflective display device provided with an optical waveguide which splits light coming in from a side into two light beams having a mutually opposite circular polarisation. Polarisation splitting is achieved at the interface of areas in the optical waveguide having a chiral nematic structure.

WO01/86200 discloses a reflective liquid crystal display provided with a front illumination unit having a flat waveguide, at least one surface has a diffraction grating having a period of the order of the wavelength of the light. A light source generates light of one or more colors, and the colors of light are sequentially coupled into the flat waveguide.

Other prior art illumination systems, such as beam splitters or other prismatic structures, are bulky and utilize longer optical paths, which often result in increased optical aberrations and are unsuitable for compact NTE display systems.

### BRIEF SUMMARY

The present invention is a frontlight according to claim 1.

In another embodiment, a display system according to claim 4 is provided.

### BRIEF DESCRIPTION OF THE DRAWINGS

Embodiments of the subject matter will hereinafter be described in conjunction with the following drawing figures, wherein like numerals denote like elements, and
FIG. 1 is a block diagram of a display system in accordance with one embodiment only part of the invention when the microdisplay system comprises a frontlight according to claim 1.
FIG. 2 is a perspective view of an exemplary microdisplay system suitable for use in the display system of FIG. 1 in accordance with an example not part of the invention; and
FIG. 3 is a perspective view of an exemplary microdisplay system suitable for use in the display system of FIG. 1 in accordance with one embodiment of the invention.

### DETAILED DESCRIPTION

The following detailed description is merely exemplary in nature and is not intended to limit the subject matter of the application and uses thereof. Furthermore, there is no intention to be bound by any theory presented in the preceding background or the following detailed description.

Techniques and technologies may be described herein in terms of functional and/or logical block components, and with reference to symbolic representations of operations, processing tasks, and functions that may be performed by various computing components or devices. It should be appreciated that the various block components shown in the figures may be realized by any number of hardware, software, and/or firmware components configured to perform the specified functions. For example, an embodiment of a system or a component may employ various integrated circuit components, e.g., memory elements, digital signal processing elements, logic elements, look-up tables, or the like, which may carry out a variety of functions under the control of one or more microprocessors or other control devices.

The following description refers to elements or nodes or features being "connected" or "coupled" together. As used herein, unless expressly stated otherwise, "connected" means that one element/node/feature is directly joined to (or directly communicates with) another element/node/feature, and not necessarily mechanically. Likewise, unless expressly stated otherwise, "coupled" means that one element/node/feature is directly or indirectly joined to (or directly or indirectly communicates with) another element/node/feature, and not necessarily mechanically. Thus, although the drawings may depict one exemplary arrangement of elements, additional intervening elements, devices, features, or components may be present in an embodiment of the depicted subject matter.

For the sake of brevity, conventional techniques related to optics, optical assemblies, light modulators, graphics and image generation, head-mountable displays, and other functional aspects of the systems (and the individual operating components of the systems) may not be described in detail herein. Furthermore, the connecting lines shown in the various figures contained herein are intended to represent exemplary functional relationships and/or physical couplings between the various elements. It should be noted that many alternative or additional functional relationships or physical connections may be present in an embodiment of the subject matter.

Technologies and concepts discussed herein relate generally to microdisplay systems suitable for use in a head-mountable display in an aircraft. Although the embodiments shown and described herein may be in the context of an aviation environment, it should be understood that the subject matter is not limited in scope for use in aircraft, and alternatively may apply in other environments, as will be appreciated in the art. Generally, the microdisplay systems described herein comprise a compact frontlight assembly capable of achieving high luminance with reduced space and/or size requirements relative to conventional frontlight displays, such as prismatic beam splitters and the like.

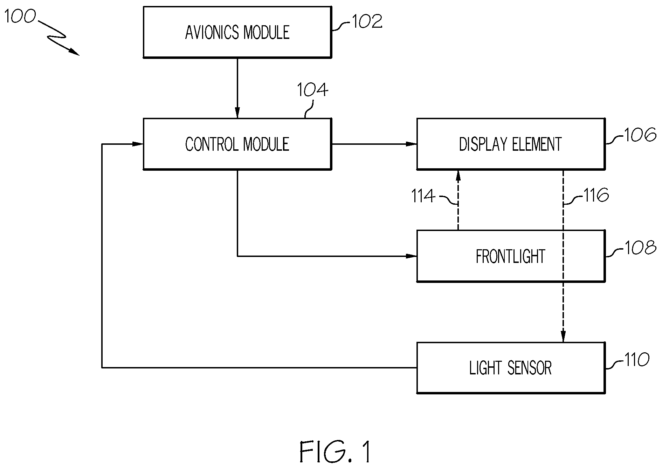

FIG. 1 depicts an arrangement of a display system 100 suitable for use with a head-mountable device in an aircraft environment. The display system 100 includes, without limitation, an avionics module 102, a control module 104, a display element 106, and a frontlight 108. As described in greater detail below, in an arrangement, the display element 106 and frontlight 108 comprise a microdisplay system which may be arranged or otherwise configured as a compact display assembly suitable for use in a head-mountable device. In various arrangements, the display system 100 may include a light sensor 110 configured to support and/or provide additional functionality or features to the display system 100 as described below. These, and other elements, may be coupled and suitably configured to present images or graphics associated with the avionics module 102 on the display element 106, as described in greater detail below. It should be understood that FIG. 1 is a simplified representation of a display system 100, and is only one example of a suitable operating environment and is not intended to suggest any limitation as to the scope of use or functionality of any practical arrangement.

In an arrangement, the avionics module 102 is coupled to the control module 104, which in turn is coupled to the display element 106 and the frontlight 108. As described in greater detail below, the frontlight 108 is disposed proximate the display element 106 and configured to produce, generate, or otherwise create illumination light rays 114 that are directed towards the display element 106. The display element 106 is configured to reflect and/or modulate the illumination light rays 114 incident on the display element 106 based on an image signal received from the control module 104 resulting in image light rays 116, as described in greater detail below. In accordance with one arrangement, a light sensor 110 is disposed proximate the frontlight 108 and configured to sense or measure the luminance of the portion of the image light rays 116 that are transmitted through the frontlight 108. The light sensor 110 is coupled to the control module 104 and provides the measured luminance to the control module 104 to create a closed-loop control system, as described in greater detail below. In an arrangement, the control module 104 adjusts and/or controls the luminance of light rays produced by the frontlight 108 such that the luminance of the light rays exiting the frontlight 108 is equal to a desired or commanded luminance, as described in greater detail below.

In an arrangement, the avionics module 102 may comprise an aircraft subsystem (such as a communications system, navigation system, flight control system, aircraft monitoring or management system, weather monitoring system, radar system, collision avoidance systems, or the like), a line-replaceable unit (LRU), external control logic, or another suitable module. In this regard, the avionics module 102 may be implemented as hardware, software, or a combination thereof. In an arrangement, the avionics module 102 provides data and/or information pertaining to operation of the aircraft (e.g., image data) to the control module 104 for presenting the data and/or information on the display element 106, as described in greater detail below. It should be appreciated that although the depicted display system 100 shows a single avionics module 102, in practice, numerous avionics modules may be present.

In an arrangement, the control module 104 functions as an interfacing mechanism between the avionics module 102 and the display element 106. The control module 104 generally represents any practical combination of hardware, software, firmware, processing logic, and/or other components which may be suitably configured to perform the tasks and functions described herein. In an arrangement, the control module 104 may be implemented or realized with a general purpose processor, a content addressable memory, a digital signal processor, an application specific integrated circuit, a field programmable gate array, any suitable programmable logic device, discrete gate or transistor logic, discrete hardware components, or any combination thereof, designed to perform the functions described herein. In this regard, a processor may be realized as a microprocessor, a controller, a microcontroller, a state machine, or the like. A processor may also be implemented as a combination of computing devices, e.g., a combination of a digital signal processor and a microprocessor, a plurality of microprocessors, one or more microprocessors in conjunction with a digital signal processor core, or any other such configuration. The control module 104 may also include sufficient data storage capacity or memory to support the operation of display system 100, as will be understood. In an arrangement, the control module 104 generates an image signal based on the image data received from the avionics module 102. The image signal controls the functionality of the display element 106, such that the display element 106 presents an image representative of the image data, as described in greater detail below.

In an arrangement, the display element 106 has a surface that reflects or modulates illumination light rays 114 that are incident on the surface based on the received image signal, as will be appreciated in the art and described in greater detail below. In other words, the image signal influences or controls the manner in which light is modulated by and/or reflected from the display element 106, as will be appreciated in the art. In the illustrated arrangement, the display element 106 modulates illumination light rays 114 from the frontlight 108 that are incident on the surface of the display element 106 to produce image light rays 116 based on the image signal. Depending on the arrangement, the display element 106 may be realized as a liquid crystal on silicon (LCOS) display, a reflective liquid crystal display (LCD), a transflective LCD, a micromirror array, a spatially addressable mirror, a holographic display, a backscattering display, or another suitable reflective light modulator known in the art. The reflecting of light rays by the display element 106 may comprise either or both specular reflection and diffuse reflection, depending upon the particular embodiment.

As described in greater detail below, in an arrangement, the frontlight 108 includes a light source configured to produce or generate source light rays with a luminance based on a command or signal received from (or provided by) the control module 104. The frontlight 108 is disposed proximate the display element 106 and configured to direct illumination rays 114 comprising at least a portion of the source light rays towards the surface of the display element 106, as described in greater detail below. The frontlight 108 is preferably configured such that at least a portion of image light rays 116, that is, the modulated illumination light rays, that are reflected by the display element 106 are transmitted through the frontlight 108 (e.g., in the opposite direction of the illumination rays 114) without deflection or other spatial obscuration which would degrade the displayed image. In other words, the frontlight 108 is effectively transparent to the image light rays 116, as described below. The portion of the modulated light rays that are transmitted through the frontlight 108 (the observation light rays) may be viewed by a user, either directly or after transmission through subsequent optical arrangements, such as, for example, collimation optics or projection optics, as will be appreciated in the art.

In an arrangement, the control module 104 receives a luminance command (e.g., from a user or via avionics module 102) that represents a desired luminance or brightness for the observation light rays (the modulated light rays that are transmitted by the frontlight 108 and observed by a user). The control module 104 is configured to adjust or control the luminance of the source light rays (e.g., the light rays generated by the light source) such that the luminance of the light rays reflected by the display element 106 and exiting through the frontlight 108 is equal to, or substantially equal to (e.g., within +/- 5% of) the luminance defined by the luminance command. In accordance with one arrangement, the control module 104 adjusts the command or signal provided to the frontlight 108 based on the image data received from the avionics module 102, as described in greater detail below. In accordance with another arrangement, the light sensor 110 is disposed proximate the frontlight 108 and is configured to measure, sense, or otherwise obtain the luminance (or brightness) of the light rays exiting the frontlight 108 (e.g., the image light rays 116 that are transmitted by the frontlight 108), and provides the measured luminance to the control module 104 to establish a closed-loop control system.

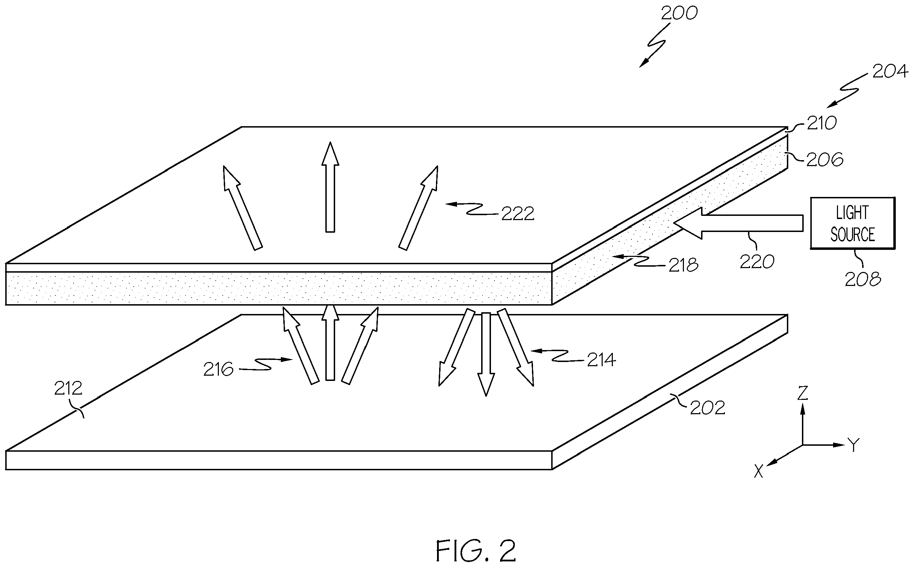

FIG. 2 depicts an example not part of the invention of a microdisplay system 200 suitable for use in the display system 100 of FIG. 1. In an example not part of the invention, the microdisplay system 200 includes, without limitation, a display element 202 and a frontlight 204. The frontlight 204 includes, without limitation, a light deflection element 206, a light source 208, and a polarizer 210. These, and possibly other elements, may be suitably configured to support operation of the microdisplay system 200 to provide illuminated viewing of the display element 202, as described in greater detail below. In an example not part of the invention, the microdisplay system 200 is adapted to be arranged as a compact assembly incorporated in a head-mountable device, such as, for example, a helmet, goggles, mask, visor, or the like. It should be understood that FIG. 2 is a simplified representation of a microdisplay system 200, and is not intended to limit the subject matter in any way. In this regard, it should be appreciated that although the subject matter may be described herein in the context of a signal controlled display element, in practice, various aspects of the subject matter described herein may be utilized with any display element having one or more reflective viewing surfaces, of arbitrary size and light modulating nature, including for example documents, photographs and three-dimensional objects, and as such, the subject matter is not intended to be limited to any particular type of display element.

In an example not part of the invention, the display element 202 has a viewing surface 212 that reflects or modulates illumination light rays 214 that are incident on the viewing surface 212 (e.g., a reflective viewing surface), resulting in image light rays 216 propagating away from the surface 212 of the display element 202, as will be appreciated in the art. Depending upon the arrangement, the viewing surface 212 may be an exterior surface of display element 202 or internal to display element 202, as will be appreciated in the art. As used herein, illumination light rays 214 should be understood as referring to the light rays that are deflected or scattered out of the light deflection element 206 towards the display element 202, wherein image light rays 216 should be understood as referring to the imagewise modulated light rays that are reflected from the display element 202, as described in greater detail below. Depending on the arrangement, the image light rays 216 may be modulated in amplitude, polarization, color or any other discernable way, and may be reflected in any suitable manner (e.g., specular, non-specular and/or various combinations thereof). In an example not part of the invention, the display element 202 is realized as a thin planar light modulating device suitable for use in a NTE display system. As shown in FIG. 2, the display element 202 has a planar or rectangular cross-section aligned along the xy reference plane. As described in greater detail below, in an exemplary embodiment, the display element 202 is configured to modulate illumination light rays 214 having a first polarization and reflect image light rays 216 having a second polarization based on a received image signal. In this regard, the display element 202 may rotate the polarization of the illumination light rays 214, resulting in reflected image light rays 216 having the second polarization. Depending on the arrangement, the display element 202 may be realized as a LCD, a LCOS display, a transflective LCD, a micromirror array, a spatially addressable mirror, a holographic display, a backscattering display, or another suitable signal-controlled reflective light modulator known in the art.

In an example not part of the invention, the frontlight 204 comprises a light deflection element 206 and a light source 208 disposed proximate to the light deflection element 206. As shown in FIG. 2, the light deflection element 206 is preferably realized as a substantially planar element disposed proximate the reflective surface 212 of the display element 202. As shown, the light deflection element 206 has a planar cross-section arranged such that the substantially planar cross-section is aligned substantially parallel to the reflective surface 212 of the display element 202. In other words, the planar cross-section of the light deflection element 206 is aligned along the *xy* reference plane. As shown, the light deflection element 206 may be separated by an air gap. Depending on the arrangement, the separation distance between the display element 202 and the light deflection element 206 (e.g., the size of the air gap) may preferably range from about zero to twenty-five percent of the maximum linear dimension of the active or light modulating area (e.g., viewing surface 212) of display element 202, as projected onto the xy reference plane. For example, if the viewing surface 212 of display element 202 has a diagonal length (or face diagonal) of twenty millimeters, the separation distance is preferably less than five millimeters.

In an example not part of the invention, the light deflection element 206 preferably has a thickness of six millimeters or less, or in other words, the substantially planar cross-section aligned along the xy reference plane has a thickness in the z-direction of less than six millimeters. It should be understood that the substantially planar geometry of the light deflection element 206 may comprise or otherwise include structures having limited curvature, for example, where ratio of the thickness of the light deflection element 206 relative to the radius of curvature is very small (e.g., the radius of curvature is greater than the thickness of the light deflection element 206 by a factor of ten or more). In an exemplary embodiment, in the case of a substantially planar display element 202, the total thickness of the frontlight 204 plus the separation distance is preferably less than thirty percent of the maximum linear dimension of the active or light modulating area (e.g., viewing surface 212) of the display element 202. For example, if the viewing surface 212 of display element 202 has a diagonal length (or face diagonal) of twenty millimeters, the total thickness from the display element 202 to the total thickness of the frontlight 204 plus the separation distance is preferably less than six millimeters. In particularly compact arrangements of microdisplay system 200, the total thickness of frontlight 204 plus the separation distance is less than ten percent of the maximum linear dimension of viewing surface 212 of the display element 202. It should be understood that the subject matter is not intended to be limited to any particular dimensions, and the exemplary dimensions described herein are provided for purposes of explanation, and that practical arrangements of the microdisplay system 200 may be realized with larger or smaller dimensions relative to those described herein. It will be appreciated in the art that further reductions in component and separation thicknesses are even more preferred, especially where the volume and/or weight of the microdisplay system 200 is concern, or when subsequent optics are used as described in further detail below.

In an example not part of the invention, the light source 208 is adjacent to an edge 218 of the light deflection element 206 and generates or produces source light rays 220 which are directed towards the edge 218 of the light deflection element 206. As used herein, source light rays 220 should be understood as referring to light rays generated, produced, created, or otherwise emitted from the light source 208. In this regard, the light source 208 directs the source light rays 220 towards the light deflection element 206 as if to create an edgelit display, as will be appreciated in the art. In the illustrated arrangement, the light source 208 is arranged such that the average direction of source light rays 220 is aligned with the substantially planar cross-section of the light deflection element 206. As shown, the source light rays 220 are collectively aligned along the y-axis. It should be appreciated that the angle of incidence, or range of angles of incidence, of the source light rays 220 with respect to the edge 218 of the light deflection element 206 may vary depending on the properties of the light deflection element 206, as described in greater detail below. Depending on the arrangement, the light source 208 may be realized as a light-emitting diode (LED), an organic light-emitting diode (OLED), a fluorescent lamp, an incandescent lamp, a laser, or another suitable light source known in the art. In accordance with one or more arrangements, the light source 208 may comprise a polarizing light source configured to produce source light rays 220 having a first polarization such that they are deflected towards the display element 202 by the light deflection element 206, as described in greater detail below.

It should be appreciated that although a single light source 208 is shown in FIG. 2, numerous light sources may be present in a practical example not part of the invention, Depending on the arrangement, these numerous light sources may be optically mixed or may, for example, be temporally pulsed and synchronized with the display element 202 to form a sequential color image as known in the art. Furthermore, although the arrangement shown in FIG. 2 functions as an edgelit frontlight as described above, it should be understood that in alternative embodiments, some or all of the source light rays 220 from light source 208 may enter the light deflection element 206 through other surfaces of light deflection element 206, such as through the remaining edges or through the upper or lower planar faces aligned along the *xy* reference plane.

In an example not part of the invention, the light deflection element 206 deflects at least a portion of the source light rays 220 from the light source 208, resulting in illumination light rays 214 directed towards the reflective surface 212 of the display element 202 as shown. The light deflection element 206 transmits, substantially without deflection, at least a portion of the image light rays 216 that are reflected from the display element 202, resulting in observation light rays 222 that exit the frontlight 204 which may be subsequently viewed by an observer either directly or via another optical arrangement (e.g., collimation optics or projection optics), as will be appreciated in the art and described in greater detail below. In other words, the light deflection element 206 is preferably configured such that it is effectively transparent to the image light rays 216. As used herein, observation light rays 222 should be understood as referring to the light rays that exit the frontlight 204 traveling away from the viewing surface 212. It should be understood that although FIG. 2 may be described herein in the context of a substantially planar (e.g., flat) display element 202 and light deflection element 206 which are aligned substantially parallel to each other with a relatively minimal separation distance, alternative arrangements may be realized using non-planar (or non-flat) elements (e.g., elements having an arcuate viewing surface) as display element 202 and/or arbitrary separation distances between the display element 202 and light deflection element 206, provided the image light rays 216 and observation light rays 222 include light rays substantially normal or perpendicular to the plane or planar cross-section of the light deflection element 206. That is, if the planar cross-section of the light deflection element 206 is aligned along the xy reference plane, the image light rays 216 and observation light rays 222 include light rays substantially aligned substantially parallel to the z-direction (or z-axis).

In an example not part of the invention, the light deflection element 206 is realized as a birefringent material or composite material that preferentially deflects at least a portion of source light rays 220 having a first polarization towards the display element 202 and preferentially transmits image light rays 216 reflected from the display element 202 that have a second polarization that is orthogonal to the first polarization. In this regard, the light deflection element 206 may comprise a polarization sensitive element configured to scatter source light rays 220 having the first polarization toward the display element 202 and transmit, without deflection, image light rays 216 reflected from the display element 202 having the second polarization. Depending on the arrangement, the polarization sensitive element may be realized in the form of a light guide, a sheet, or another suitable structure having a substantially planar cross-section. For example, U.S. Pat. No. 5,751,388 entitled "HIGH EFFICIENCY POLARIZED DISPLAY," assigned to the assignee of the present application, discloses several exemplary polarization sensitive structures suitable for inclusion in or on light deflection element 206. In accordance with one example not part of the invention, the light deflection element 206 is realized as a polarization sensitive element comprising a microstructural composite of material domains having differing birefringence. For example, the light deflection element 206 may comprise a first set of spatial domains in the form of birefringent particles or regions distributed throughout another spatial domain in the form of a polymer matrix. The domains are preferably orientationally aligned such that the refractive indices of the composite domains are substantially matched for a first spatial axis but are unmatched for a second spatial axis. This variable degree of index matching provides a mechanism for polarization sensitive deflection of light rays. In one such embodiment the microstructural composite is in the form of an aligned polymer dispersed liquid crystal (PDLC). In some arrangements, the light deflection element 206 may include diffractive structures and/or embedded arrays of polarization sensitive tilted beamsplitters. The light source 208 is preferably configured to establish the angle of incidence of the source light rays 220 with respect to the edge 218 of the light deflection element 206 such that the light deflection element 206 preferentially reflects, scatters, or otherwise deflects a portion of source light rays 220 having the first polarization towards the display element 202. Special compensation for frontlight illumination uniformity can be incorporated as necessary, for example by varying the size, spacing and or density of the polarization sensitive regions within light deflection element 206.

In accordance with one or more examples not part of the invention, the frontlight 204 further comprises a polarizer 210 configured to absorb light rays having the same polarization as the illumination light rays 214 deflected and/or scattered towards the display element 202. In other words, if the light deflection element 206 is a polarization sensitive element configured to scatter light rays having a first polarization and transmit light rays of a second polarization, the polarizer 210 is configured to absorb light rays of the first polarization and transmit light rays of the second polarization. In this manner, the polarizer 210 ensures that the observation light rays 222 are comprised primarily of light rays that have been modulated by the display element 202, that is, the observation light rays 222 are composed primarily of image light rays 216. In an arrangement, the polarizer 210 is disposed proximate the light deflection element 206 such that the light deflection element 206 is interposed between the reflective surface 212 of the display element 202 and the polarizer 210. As shown, the polarizer 210 is preferably realized as a substantially planar element having a substantially planar cross-section with dimensions equivalent to the planar cross-section of the light deflection element 206. The polarizer 210 is arranged such that it is aligned substantially parallel to the light deflection element 206, or in other words, the planar cross-section of the polarizer 210 is aligned along the *xy* reference plane. In the illustrated arrangement, the polarizer 210 and the light deflection element 206 are affixed or joined to create a compact frontlight assembly, as will be appreciated in the art. However, in other embodiments, the polarizer 210 and the light deflection element 206 may be separated by an air gap or additional intervening elements, as described in greater detail below. Depending on the arrangement, the polarizer 210 may be realized as a conventional sheet polarizer or another suitable polarizing structure known in the art.

By virtue of the configuration described above, the frontlight 204 can be thin and scalable in area without undue increases in thickness such as would occur with a prior art beam splitter approach, as will be appreciated in the art. As a result, additional optics (e.g., field lens, collimation optics, projection optics) may be positioned closer to the display element 202, which in turn simplifies both the optical and physical design constraints of the optics, the frontlight 204, and/or microdisplay system 200, for example, by making it more compact, lighter weight, and resulting in fewer optical aberrations. Another advantage of the microdisplay system 200 is that an internally reflective display element may be used without the need for emitters, diffusers, or polarizers internal to the display element. As a result, the display element may be tailored for high resolution, and the efficiency can be quite high because aperture ratio considerations commonly associated with transmissive display structures need not be a concern, as will be appreciated in the art. Further, the display element 202 can be tailored to match the illumination spectrum of the illumination light rays 214.

Referring now to FIG. 1 and FIG. 2, the microdisplay system 200 may be utilized in the display system 100 of FIG. 1. In this regard, the light source 208 may be coupled to a control module (e.g., control module 104) and configured to generate source light rays 220 having a first luminance based on a command or signal received from (or provided by) the control module. The control module may adjust the command or signal provided to the frontlight 204 to adjust the luminance of the source light rays 220, for example, by increasing the current supplied to the light source 208. In an exemplary embodiment, the control module adjusts the luminance of the source light rays 220 based upon the image data received by the control module such that the luminance of the observation light rays 222 is substantially equal to a commanded or desired luminance. For example, if the display element 202 is realized as an LCOS device and the image data (e.g., received by the control module from an avionics module) results in sparse symbology on the display, the majority of the illumination light rays 214 incident on the surface 212 of the display element 202 will be reflected back towards the frontlight 204, forming in essence an extended frontlight cavity. The portion that is appropriately polarized may pass through the light deflection element 206 and contribute to the observed image, but in the case of sparse symbology, the amount of light rays exiting the frontlight 204 (e.g., observation light rays 222) may be a small fraction of the total light in the cavity. In this case, increasing the amount of symbology will reduce the cavity brightness, and in turn, reduce the luminance of the observation light rays 222. In response to increased symbology, the control module may increase the current and/or power provided to the frontlight 204 (or light source 208) based on the image data (or content) to allow the luminance of the observation light rays 222 to be maintained or held substantially constant as the image content varies. This cavity effect can be utilized to reduce the input current and/or power provided to the frontlight 204 in the case of sparse symbology.

In accordance with one example not part of the invention, the control module may adjust the luminance of the source light rays 220 based on computation of the quantity of symbology within the displayed image area (e.g., the quantity of symbology represented within reflective surface 212). In an alternative arrangement, a light sensor (e.g., light sensor 110) may be disposed proximate the frontlight 204 to obtain and/or measure the luminance of the observation light rays 222 that are transmitted by the frontlight 204 and create a closed-loop control system. The control module may then adjust the luminance of the source light rays 220 based on the measured luminance of the observation light rays 222 and/or the image data, as described above.

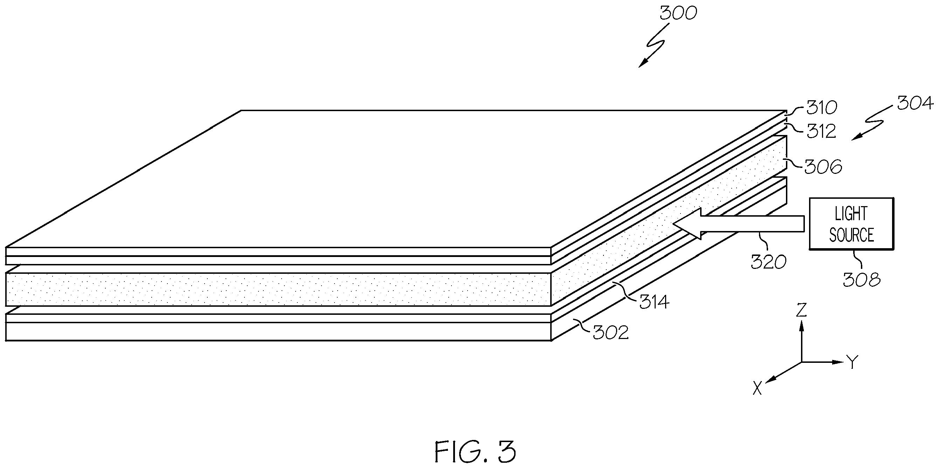

FIG. 3 depicts an exemplary embodiment, according to the invention, of a microdisplay system 300 suitable for use in the display system 100 of FIG. 1. The microdisplay system 300 includes, without limitation, a display element 302 and a frontlight 304. The frontlight 304 includes, without limitation, a polarization sensitive element 306, a light source 308, a polarizer 310, and a specular polarization sensitive element 312. Various elements of the microdisplay system 300 are similar to their counterpart elements found in the microdisplay system 200 described above with reference to FIG. 2, and as such, these common elements will not be redundantly described in detail here in the context of the microdisplay system 300. As described above, the polarization sensitive element 306 is configured to deflect (e.g. scatter) source light rays 320 from the light source 308 having a first polarization towards the display element 302, and the frontlight 304 and/or polarization sensitive element 306 is configured to transmit image light rays that are reflected by the display element 302 having a second polarization orthogonal to the first polarization. As shown, in an exemplary embodiment, the display element 302 and the frontlight 304 are preferably realized using thin and substantially planar elements as described above, such that the microdisplay system 300 may be suitable configured for use as a NTE display, as will be appreciated in the art.

As shown in FIG. 3, the specular polarization sensitive element 312 is disposed between the polarizer 310 and the polarization sensitive element 306. The specular polarization sensitive element 312 is configured to specularly reflect light rays having the same polarization as the illumination light rays deflected or scattered by the polarization sensitive element 306 towards the display element 302. In other words, if the polarization sensitive element 306 is configured to scatter light rays having a first polarization and transmit light rays of a second polarization, the specular polarization sensitive element 312 is configured to specularly reflect light rays of the first polarization and transmit light rays of the second polarization. Depending on the embodiment, the specular polarization sensitive element 312 may be realized as a dual brightness enhancement film (DBEF), a wire-grid polarizer, a cholesteric polarizer, a reflective polarizer, or another suitable non-absorbing polarizer structure. As shown, the specular polarization sensitive element 312 is preferably realized as a substantially planar element having a planar cross-section with dimensions substantially equivalent to the polarizer 310 and the polarization sensitive element 306, as described above. In an exemplary embodiment, the polarizer 310 and the specular polarization sensitive element 312 are affixed or joined. The specular polarization sensitive element 312 is preferably separated from the polarization sensitive element 306 by an air gap as shown, but the specular polarization sensitive element 312 can also be index matched to the polarization sensitive element 306, although with possibly reduced optical efficiency.

In an exemplary embodiment, the polarizer angles of the polarizer 310, the polarization sensitive element 306, and the specular polarization sensitive element 312 may be oriented to maximize the performance, for example the luminance or contrast ratio, of the microdisplay system 300. While the embodiments described herein reference first and second polarizations which are generally orthogonal, many basic variations can be found by those skilled in the art. Examples include use of circular versus linear polarization, addition of polarization rotating elements such as retardation films, and use of color selective polarizers. In an exemplary embodiment, an optical film 314, such as an optical compensation film, is disposed between the polarization sensitive element 306 and the display element 302, such that the 314 overlies the reflective surface of the display element 302 and improves the contrast over viewing angle, as will be appreciated in the art. In accordance with one embodiment, the optical film 314 comprises a birefringent waveplate which rotates or otherwise converts the polarization characteristics of the light rays passing through it. In yet another embodiment, the optical film 314 may comprise a front polarizer for display element 302 which converts any polarization modulation within display element 302 to light amplitude modulation. In this embodiment, the polarization axis of the optical film 314 is preferably oriented at an angle, for example 45 degrees, with respect to the polarization sensitive axis of polarization sensitive element 306. In various embodiments, the interfaces of the various elements of the microdisplay system 300 may be coated with a low reflectance coating or antireflective coating to further improve the performance of the microdisplay system 300.

To briefly summarize, the microdisplay system described above may be utilized in a compact, high performance NTE display system capable of providing high luminance and suitable for use in an aircraft environment. A reflective light modulator, such as an LCOS device or other suitable display element, is used arranged with a frontlight configured such that it is effectively transparent to the light reflected by the light modulator. Polarizers and additional optical components may be utilized to maximize contrast ratio, reduce glare, and further improve performance for the microdisplay system.

While at least one exemplary embodiment has been presented in the foregoing detailed description, it should be appreciated that a vast number of variations exist. It should also be appreciated that the exemplary embodiment or exemplary embodiments are only examples, and are not intended to limit the scope, applicability, or configuration of the subject matter in any way. Rather, the foregoing detailed description will provide those skilled in the art with a convenient road map for implementing an exemplary embodiment of the subject matter. It being understood that various changes may be made in the function and arrangement of elements described in an exemplary embodiment without departing from the scope of the subject matter as set forth in the appended claims.

## Claims

1. A frontlight (204) for viewing a display element (202) having a surface (212) configured to reflect light rays incident on the surface (212) resulting in image light rays (216), the frontlight (204) comprising:
a polarization sensitive element (306) disposed proximate the surface (212) of the display element (202);
a polarizer (210) configured to absorb light rays of a first polarization and transmit light rays (222) of a second polarization, the second polarization being orthogonal to the first polarization, the polarizer (210) being disposed proximate the polarization sensitive element (306)such that the polarization sensitive element (306)is disposed between the display element (202) and the polarizer (210); and
a light source (208) disposed proximate the polarization sensitive element (306), the light source (208) being configured to produce source light rays (220), wherein the polarization sensitive element (306) includes a planar cross-section aligned substantially parallel to the surface (212) of the display element (202), and the polarization sensitive element (306) is configured to:
scatter at least a portion (214) of the source light rays (220) having the first polarization toward the surface (212) of the display element (202); and
transmit without deflection at least a portion (222) of the image light rays (216) reflected from the display element (202) having the second polarization, the portion of the image light rays (216) transmitted by the polarization sensitive element (306)being substantially normal to the polarization sensitive element (306).

2. The frontlight (204) of claim 1, wherein the light source (208) is adjacent to an edge (218) of the planar cross-section of the polarization sensitive element (306)and produces source light rays (220) aligned with the planar cross-section of the polarization sensitive element (306).

3. The frontlight (204) of claim 1, further comprising a specular polarization sensitive element (312) disposed between the polarizer (210, 310) and the polarization sensitive element (306), wherein the specular polarization sensitive element (312) is configured to specularly reflect light rays of the first polarization and transmit light rays of the second polarization.

4. A display system (100) comprising the frontlight (108, 204) of claim 1.

5. The display system (100) of claim 4, the display system (100) comprising a control module coupled to the display element (106, 202) and the frontlight (108, 204), wherein:
the display element (106, 202) is configured to modulate light rays (114, 214) of the first polarization and reflect image light rays (116, 216) of the second polarization based on an image signal received from the control module (104);
the light source (208) is configured to generate the source light rays (220) with a first luminance;
the frontlight (108, 204) transmits the light rays (222) of the second polarization with a second luminance; and
the control module (104) is configured to:
generate the image signal for the display element (106,202) based on received image data; receive a luminance command; and
adjust the first luminance such that the second luminance for the light rays (116, 222) exiting the frontlight (108, 204) is substantially equal to the luminance command.

6. The display system of claim 5, wherein the control module adjusts the first luminance based at least in part on the received image data.

7. The display system of claim 5, further comprising a light sensor (110) coupled to the control module (104) and disposed proximate the frontlight (108, 204), the light sensor being configured to measure the second luminance and provide the second luminance to the control module.

## Patentansprüche

1. Frontleuchte (204) zum Betrachten eines Anzeigeelements (202), das eine Oberfläche (212) aufweist, die dafür konfiguriert ist, auf die Oberfläche (212) einfallende und in Bildlichtstrahlen (216) resultierende Lichtstrahlen zu reflektieren, wobei die Frontleuchte (204) Folgendes umfasst:
ein polarisationsempfindliches Element (306), das nahe der Oberfläche (212) des Anzeigeelements (202) angeordnet ist,
einen Polarisator (210), der dafür konfiguriert ist, Lichtstrahlen einer ersten Polarisation zu absorbieren und Lichtstrahlen (222) einer zweiten Polarisation durchzulassen, wobei die zweite Polarisation orthogonal zur ersten Polarisation ist, wobei der Polarisator (210) nahe des polarisationsempfindlichen Elements (306) derart angeordnet ist, dass das polarisationsempfindliche Element (306) zwischen dem Anzeigeelement (202) und dem Polarisator (210) angeordnet ist, und
eine Lichtquelle (208), die nahe des polarisationsempfindlichen Elements (306) angeordnet ist, wobei die Lichtquelle (208) dafür konfiguriert ist, Quellenlichtstrahlen (220) zu erzeugen, wobei das polarisationsempfindliche Element (306) einen planaren Querschnitt beinhaltet, der im Wesentlichen parallel zur Oberfläche (212) des Anzeigeelements (202) ausgerichtet ist, und das polarisationsempfindliche Element (306) konfiguriert ist, um:
zumindest einen Teil (214) der die erste Polarisation aufweisenden Quellenlichtstrahlen (220) zur Oberfläche (212) des Anzeigeelements (202) hin zu streuen und zumindest einen Teil (222) der vom Anzeigeelement (202) reflektierten, die zweite Polarisation aufweisenden Bildlichtstrahlen (216) ohne Ablenkung durchzulassen, wobei der vom polarisationsempfindlichen Element (306) durchgelassene Teil der Bildlichtstrahlen (216) im Wesentlichen senkrecht zum polarisationsempfindlichen Element (306) ist.

2. Frontleuchte (204) nach Anspruch 1, wobei die Lichtquelle (208) an einen Rand (218) des planaren Querschnitts des polarisationsempfindlichen Elements (306) angrenzt und mit dem planaren Querschnitt des polarisationsempfindlichen Elements (306) ausgerichtete Quellenlichtstrahlen (220) erzeugt.

3. Frontleuchte (204) nach Anspruch 1, ferner umfassend ein spiegelndes polarisationsempfindliches Element (312), das zwischen dem Polarisator (210, 310) und dem polarisationsempfindlichen Element (306) angeordnet ist, wobei das spiegelnde polarisationsempfindliche Element (312) dafür konfiguriert ist, Lichtstrahlen der ersten Polarisation spiegelnd zu reflektieren und Lichtstrahlen der zweiten Polarisation durchzulassen.

4. Anzeigesystem (100), das die Frontleuchte (108, 204) nach Anspruch 1 umfasst.

5. Anzeigesystem (100) nach Anspruch 4, wobei das Anzeigesystem (100) ein an das Anzeigeelement (106, 202) und die Frontleuchte (108, 204) gekoppeltes Steuermodul umfasst, wobei:
das Anzeigeelement (106, 202) dafür konfiguriert ist, auf Grundlage eines vom Steuermodul (104) empfangenen Bildsignals Lichtstrahlen (114, 214) der ersten Polarisation zu modulieren und Lichtstrahlen (116, 216) der zweiten Polarisation zu reflektieren,
die Lichtquelle (208) dafür konfiguriert ist, die Quellenlichtstrahlen (220) mit einer ersten Leuchtdichte zu erzeugen,
die Frontleuchte (108, 204) die Lichtstrahlen (222) der zweiten Polarisation mit einer zweiten Leuchtdichte durchlässt und
das Steuermodul (104) konfiguriert ist, um:
das Bildsignal für das Anzeigeelement (106, 202) auf Grundlage empfangener Bilddaten zu erzeugen,
eine Leuchtdichteanweisung zu empfangen und
die erste Leuchtdichte derart anzupassen, dass die zweite Leuchtdichte für die aus der Frontleuchte (108, 204) austretenden Lichtstrahlen (116, 222) im Wesentlichen gleich der Leuchtdichteanweisung ist.

6. Anzeigesystem nach Anspruch 5, wobei das Steuermodul die erste Leuchtdichte zumindest teilweise auf Grundlage der empfangenen Bilddaten anpasst.

7. Anzeigesystem nach Anspruch 5, ferner umfassend einen Lichtsensor (110), der an das Steuermodul (104) gekoppelt und nahe der Frontleuchte (108, 204) angeordnet ist, wobei der Lichtsensor dafür konfiguriert ist, die zweite Leuchtdichte zu messen und die zweite Leuchtdichte an das Steuermodul zu liefern.

## Revendications

1. Dispositif d'éclairage par l'avant (204) destiné à visualiser un élément d'affichage (202) ayant une surface (212) configurée pour réfléchir des rayons lumineux incidents sur la surface (212), ce qui donne des rayons lumineux d'image (216), le dispositif d'éclairage par l'avant (204) comprenant :
un élément sensible à la polarisation (306) disposé à proximité de la surface (212) de l'élément d'affichage (202) ;
un polariseur (210) configuré pour absorber des rayons lumineux d'une première polarisation et transmettre des rayons lumineux (222) d'une deuxième polarisation, la deuxième polarisation étant orthogonale à la première polarisation, le polariseur (210) étant disposé à proximité de l'élément sensible à la polarisation (306) de telle sorte que l'élément sensible à la polarisation (306) est disposé entre l'élément d'affichage (202) et le polariseur (210) ; et
une source de lumière (208) disposée à proximité de l'élément sensible à la polarisation (306), la source de lumière (208) étant configurée pour produire des rayons lumineux sources (220), l'élément sensible à la polarisation (306) comportant une section transversale plane alignée de façon sensiblement parallèle à la surface (212) de l'élément d'affichage (202), et l'élément sensible à la polarisation (306) étant configuré pour :
diffuser au moins une partie (214) des rayons lumineux sources (220) ayant la première polarisation vers la surface (212) de l'élément d'affichage (202) ; et
transmettre sans déviation au moins une partie (222) des rayons lumineux d'image (216) réfléchis depuis l'élément d'affichage (202) ayant la deuxième polarisation, la partie des rayons lumineux d'image (216) transmis par l'élément sensible à la polarisation (306) étant sensiblement normale à l'élément sensible à la polarisation (306).

2. Dispositif d'éclairage par l'avant (204) de la revendication 1, dans lequel la source de lumière (208) est adjacente à un bord (218) de la section transversale plane de l'élément sensible à la polarisation (306) et produit des rayons lumineux sources (220) alignés avec la section transversale plane de l'élément sensible à la polarisation (306).

3. Dispositif d'éclairage par l'avant (204) de la revendication 1, comprenant en outre un élément sensible à la polarisation spéculaire (312) disposé entre le polariseur (210, 310) et l'élément sensible à la polarisation (306), l'élément sensible à la polarisation spéculaire (312) étant configuré pour réfléchir de façon spéculaire des rayons lumineux de la première polarisation et transmettre des rayons lumineux de la deuxième polarisation.

4. Système d'affichage (100) comprenant le dispositif d'éclairage par l'avant (108, 204) de la revendication 1.

5. Système d'affichage (100) de la revendication 4, le système d'affichage (100) comprenant un module de commande couplé à l'élément d'affichage (106, 202) et au dispositif d'éclairage par l'avant (108, 204), dans lequel :
l'élément d'affichage (106, 202) est configuré pour moduler des rayons lumineux (114, 214) de la première polarisation et réfléchir des rayons lumineux d'image (116, 216) de la deuxième polarisation sur la base d'un signal d'image reçu depuis le module de commande (104) ;
la source de lumière (208) est configurée pour générer les rayons lumineux sources (220) avec une première luminance ;
le dispositif d'éclairage par l'avant (108, 204) transmet les rayons lumineux (222) de la deuxième polarisation avec une deuxième luminance ; et
le module de commande (104) est configuré pour :
générer le signal d'image pour l'élément d'affichage (106, 202) sur la base de données d'image reçues ;
recevoir une commande de luminance ; et
régler la première luminance de telle sorte que la deuxième luminance pour les rayons lumineux (116, 222) sortant du dispositif d'éclairage par l'avant (108, 204) soit sensiblement égale à la commande de luminance.

6. Système d'affichage de la revendication 5, dans lequel le module de commande règle la première luminance au moins en partie sur la base des données d'image reçues.

7. Système d'affichage de la revendication 5, comprenant en outre un capteur de lumière (110) couplé au module de commande (104) et disposé à proximité du dispositif d'éclairage par l'avant (108, 204), le capteur de lumière étant configuré pour mesurer la deuxième luminance et fournir la deuxième luminance au module de commande.
